# EUROPEAN PATENT APPLICATION

(11) **EP 2 474 406 A2**
(43) Date of publication of application: **11.07.2012**
(21) Application number: 11194469.0
(22) Date of filing: 20.12.2011
(51) Int. Cl.: B29C 51/14

(54) **Method for manufacturing packaging or a part thereof by using laminates consisting of plastic and fiber layers**

(30) Priority: 11.01.2011 FI 20115031; 16.12.2011 FI 20116276
(71) Applicant: Paccor Finland Oy, 13300 Hämeenlinna (FI)
(72) Inventor: Jaatinen, Marita, FI-33960 Pirkkala (FI); Jokimies, Pekka, FI-13220 HÄMEENLINNA (FI); Karjalainen, Jarmo, FI-13300 Hämeenlinna (FI); Niskakoski, Vesa, FI-14240 JANAKKALA (FI); Salo, Jari, FI-13300 Hämeenlinna (FI); Tiainen, Hannu, FI-37600 Valkeakoski (FI)
(74) Representative: Heinänen, Pekka Antero

(57) **Abstract**

Method for manufacturing packaging (1), e.g. food packaging, or a part, such as a lid, thereof, in which method the material used is fiber material and plastic material such that the material comprises one or more fiber material layers and one or more plastic material layers, and which material is formed into a product with plastics forming technology.

## Description

The object of the present invention is a method for manufacturing packaging, more particularly food packaging, or a part, such as a lid, of said packaging.

Food packagings and parts of them, such as lids, manufactured from various materials and with various manufacturing methods are known in the art. Conventionally, fiber packagings, such as trays, boxes, drinking cups and plates, or the lids of these, said packagings being manufactured either from just fiber material or containing a plastic layer, are manufactured on machines intended for forming fiber packagings. One example of this that can be mentioned is Finnish patent 117933, wherein a plastic-coated cardboard dish is manufactured with a conventional manufacturing method for cardboard dishes.

In these types of food packagings containing fiber material it is necessary to crease the corners of the box, which is an additional work phase. In addition, at the point of the creasing the top surface of the edge of the box is wrinkled and it is necessary in many cases that it is coated e.g. with plastic or in some other manner to smooth it, so that the lid can be fixed tightly to it.

The aim of the present invention is to achieve a method that enables the manufacturing of food packagings containing fiber material and parts of said packagings with a technology in which creasing is not needed. The method according to the invention is **characterized in that** in the method the material used is fiber material and plastic material such that the material comprises one or more fiber material layers and one or more plastic material layers, and which material is formed into a product with plastics forming technology.

One preferred embodiment of the method according to the invention is **characterized in that** the packaging or a part of it is manufactured by thermoforming and/or by vacuum forming/underpressure forming with a machine intended for machining plastics.

Another preferred embodiment of the method according to the invention is **characterized in that** the fiber material layers are of different material to each other and/or the plastic layers are of different material to each other.

Yet another preferred embodiment of the invention is **characterized in that** the fiber material layers are of different material to each other and/or the plastic layers are of different material to each other.

One of the advantages of the invention that can be mentioned is that in the manufacturing of the product a greater dimensional accuracy, utilization of a more developed technology and improved production efficiency are all achieved. The product is shaped e.g. with a thermoforming machine intended for machining plastics and with a certain cardboard grade without the creasing of corners. This is based on the fact that in thermoforming technology the material stretches, in which case creases are not needed.

In the following, the invention will be described in more detail by the aid of some preferred embodiments with reference to the attached drawings, wherein
Fig. 1 presents an oblique top view of one food packaging manufactured with the method according to the invention.
Fig. 2 presents the same as Fig. 1, but as an oblique bottom view.

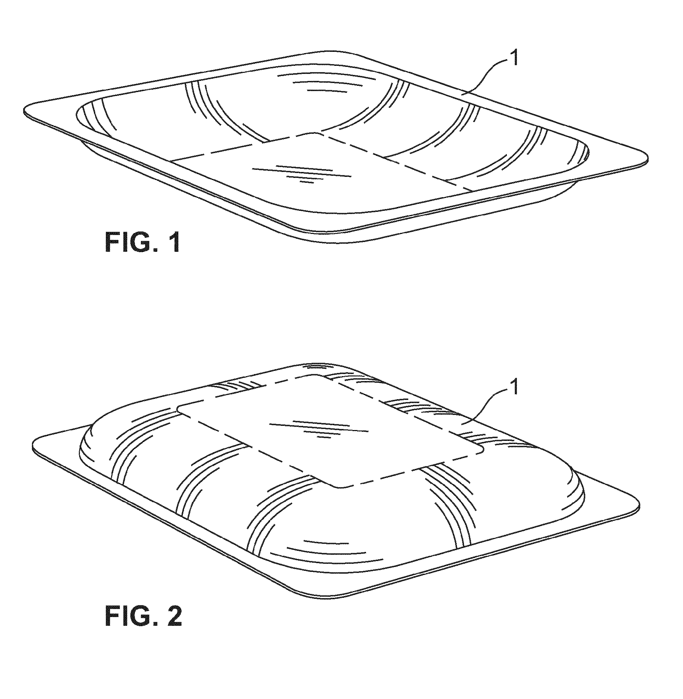

Figs. 1 and 2 present by way of an example a rectangular, box-like food packaging 1, which has been manufactured with the method according to the invention.

The products to be shaped can, however, be of other types of shapes. In principle, these will include packagings that are triangular, rectangular and polygonal, box-like, circular, of different heights and that stack nested into each other, or the lids of these aforementioned packagings. The products can also have vertical walls, in which case they do not stack nesting inside each other. The packages formed and their lids can also be used as food packagings and they can also be gas proof and/or vapor proof depending on the intended application.

The products can be durable to use in a microwave oven and/or conventional oven. The products to be shaped can also comprise a uniform horizontal plane, onto which a separate film and/or lid can be seamed, which can be of plastic and/or of a fiber-based material.

The product can also contain one or more separate compartments, in which case the compartmentalizing partition(s) can extend to the level of the seamable plane of the product and can be connected to said plane, forming separate compartments in the product, said compartments being if necessary gas proof and vapor proof.

A fiber-containing and plastic layered material is used as material of the packaging according to the invention, in which material the proportion of fiber is 95% - 5%, preferably 65% - 5%, of the total thickness and the proportion of plastic is correspondingly 5% - 95%, preferably 5% - 35%, of the total thickness of the product. There are one or more of both of the layers formed from these materials, and they can be symmetrically or asymmetrically situated. Preferably at least one plastic layer is on the surface of the product. The fiber-containing material layers can also be manufactured from different fiber grades to each other.

The plastic layer or plastic layers can be formed from different grades of plastic and from mixtures of said grades. In addition, in structures of a fiber layer and plastic layer, or in structures of multiple layers, a different adhesion material can be between the layers. A material structure, which can be dual-layer or multiple-layer, can initially be on in a roll, in sheet form, or a piece pre-cut from these. There can be printing on one side or on both sides on the aforementioned rolls, sheets or pre-cut pieces. There can additionally be a plastic film on top of the printing, the thickness of said film being 0.5%-30% of the total thickness of the structure to be thus formed.

In the manufacturing process of the product according to the invention, the material coming from a roll, the material in sheet form or the pre-cut pieces are conveyed between all or some of the following different process phases by the aid of spiked chains, conveyor chains, conveyor belts or robotics, or with a combination of these. The aforementioned dual-layered or multiple-layered material is first heated from above or from below or from both sides in a so-called heating phase e.g. with ceramic resistors, quartz resistors or other resistors that radiate heat, or with some other heating methods with which heat can be transferred to the material to be heated.

A possible phase after heating, when using rolled material or sheet material, can be a die stamping phase, in which the parts to be shaped are pre-cut from the rolled material or sheet material such that the aforementioned parts to be formed into a product can be partly or wholly cut out from the aforementioned rolled material and sheet material.

Immediately after the heating phase there can also be a shaping phase, in which the shape of the product is brought about. Shaping can be done by thermoforming by mechanically pressing, or with a pressure-difference between the different sides of the blank to be shaped (vacuum/underpressure forming), or by a combination of these two methods. A product formed in the shaping phase can also be cut, partly or wholly, out of the surrounding material. This cutting out can also take place in a separate cutting station after the shaping phase. In connection with the cutting, separate points can also be cut in the product, which points remain as holes in the product. Cutting can here also apply only to the aforementioned separate holes.

After the shaping phase and/or the cutting phase a separate plastic layer, hereinafter "film", can also be added to the product, to the top side, bottom side or both sides of the product, by mechanically pressing, by means of a pressure difference of the different sides of the surfaces, or by a combination of these, such that adhesion between the film and the product is resistant to cold and/or heat, unless detachment is purposely intended. The aforementioned film to be possibly added can be heated before the joining phase for improving the adhesion. The film to be added can be discharged from a separate roll, or supplied as separate sheets, or as a combination of these. The film can be composed of one or more plastic materials, different combinations, the oxygen proofness of which is in the region of 5-100000 cm3/m2/1µm (24h, HR 25-50%, 100% 02) and vapor proofness of which is 100-11000 g/m2/1µm (24h, 100% H2O). In the aforementioned film, a separate adhesive material layer can also be added for improving the adhesion.

Stacking of the products occurs, if the products are nestably stackable, after the partial or complete cutting out in a separate stacking phase and by the aid of possible separate automation and robotics.

It is obvious to the person skilled in the art that the invention is not limited to the embodiments presented above, but that it can be varied within the scope of the claims presented below. Thus, for example, the term "plastic material" covers oil-based plastics (non-biodegradable), but also decomposable oil-based/non-renewable plastic materials as well as bio-based/renewable and decomposable materials.

The characteristic features possibly presented in the description in conjunction with other characteristic features can, if necessary, be used separately to each other.

## Claims

1. Method for manufacturing packaging (1), e.g. food packaging, or a part, such as a lid, thereof, in which method the material used is fiber material and plastic material such that the material comprises one or more fiber material layers and one or more plastic material layers, and which material is formed into a product with plastics forming technology.

2. Method according to claim 1, **characterized in that** the packaging (1) or a part of it is manufactured by thermoforming and/or by vacuum forming/underpressure forming with a machine intended for machining plastics.

3. Method according to claim 1, **characterized in that** the fiber material layers are of different material to each other and/or the plastic layers are of different material to each other.

4. Method according to claim 3, **characterized in that** the material is supplied into the manufacturing process from a roll, in sheet form or as pre-cut pieces.

5. A manufacturing process according to any of claims 1-4, **characterized in that** the material is conveyed at least via a heating phase and also a shaping phase.

6. Method according to claim 5, **characterized in that** a product formed in the shaping phase is cut, partly or wholly, out of the surrounding material in the aforementioned shaping phase.

7. Method according to claim 5, **characterized in that** a product formed in the shaping phase is cut, partly or wholly, out of the surrounding material in a separate cutting station.

8. Method according to claim 6 or 7, **characterized in that** after the shaping phase or the cutting phase a separate plastic layer is added to the product, to the top, to the bottom or to both sides of said product.
